# EUROPÄISCHE PATENTSCHRIFT

(11) **EP 0 522 399 B1**
(45) Veröffentlichungstag und Bekanntmachung des Hinweises auf die Patenterteilung: **21.08.1996**
(21) Anmeldenummer: 92110961.7
(22) Anmeldetag: 29.06.1992
(51) Int. Cl.: C09B 62/24, C09B 62/245, C09B 62/25, C09B 62/255, C09B 62/20, C09B 62/22

(54) **Pyridon-Azo-Reaktivfarbstoffe**
Pyridonazo reactive dyes
Colorants réactifs de type pyridonazoique

(30) Priorität: 11.07.1991 DE 4122866
(43) Veröffentlichungstag der Anmeldung: 13.01.1993
(73) Patentinhaber: BAYER AG, 51368 Leverkusen (DE)
(72) Erfinder: Reddig, Wolfram, Dr., W-5060 Bergisch Gladbach 1 (DE); Herd, Karl Josef, Dr., W-5068 Odenthal-Holz (DE)

(56) Entgegenhaltungen:
- DE-A- 4 034 993

## Beschreibung

Die Erfindung betrifft Reaktivfarbstoffe mit einem Difluorpyrimidinrest.

Derartige Reaktivreste sind zwar bereits aus DE-A-1 644 204 (US-A 3 669 951) und DE-A 2 114 158 (US-A-4 065 446) bekannt, jedoch weisen sie zum Teil noch anwendungstechnische Probleme auf.

Weiterhin sind aus DE-A 3 542 001 und DE-A 2 123 061 (US-A 4 067 864) bereits Pyridon-Azo-Reaktivfarbstoffe bekannt. Auch diese Farbstoffe sind noch verbesserungs-würdig.

Die vorliegende Erfindung betrifft mono-reaktive Mono-und Disazoreaktivfarbstoffe, die als freie Säuren der Formel entsprechen: 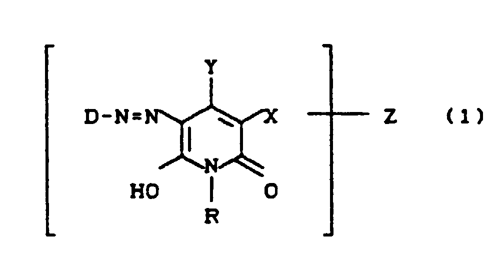 worin bedeuten
- D =: Rest einer Diazokomponente,
- R =: H, ein gegebenenfalls durch OH, SO₃H, OSO₃H, NH₂, CO₂H, NH(C₁-C₄-Alkyl) oder C₁-C₄-Alkoxy substituierter C₁-C₆-Alkylrest, ein cycloaliphatischer C₃-C₆-Kohlenwasserstoffrest, ein gegebenenfalls durch SO₃H, CO₂H, CH₃, Cl, Br, OCH₃, OC₂H₅, NH₂, NH(C₁-C₄-Alkyl) substituierter Phenyl-oder Hetarylrest,
- X =: H, Cl, Br, CH₃, CH₂SO₃H, CH(CH₃)-SO₃H, CONH₂, CN, SO₂CH₃, COCH₃, SO₃H, 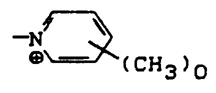 oder 1
oder 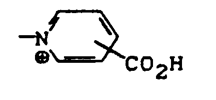
- Y =: H, OH, ein gegebenenfalls durch Cl, OH, SO₃H, OSO₃H, CO₂H substituierter C₁-C₄-Alkylrest; ein gegebenenfalls durch SO₃H, CO₂H, CH₃, Cl, Br, OCH₃, OC₂H₅, NH₂, NH(C₁-C₄-Alkyl) substituierter Phenyl- bzw. Benzylrest oder CO₂H und
- Z =: faserreaktiver Rest der Formel (2)

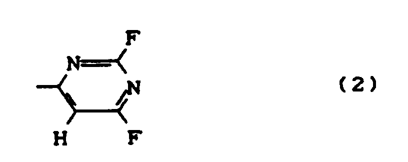

D steht bevorzugt für einen sulfogruppenhaltigen Rest der Benzol-, Naphthalin- oder Azobenzolreihe und kann zusätzlich durch weitere Substituenten, beispielsweise SO₃H, CO₂H, C₁-C₄-Alkyl, Halogen, C₁-C₄-Alkoxy, Acylamino, Ureido, Mesylamino, Amino, C₁-C₄-Alkylamino, Amino-C₁-C₄-alkyl, C₁-C₄-Alkylamino-C₁-C₄-alkyl, speziell Aminomethyl bzw. (Methylamino)methyl, oder 2-Aminoethylsulfonyl bzw. 2-(N-Alkylamino)ethylsulfonyl substituiert sein.

Z kann sowohl an D als auch an Y oder R gebunden sein.

In einer bevorzugten Ausführungsform entsprechen die Verbindungen der Formel (1) folgender Formel (3): 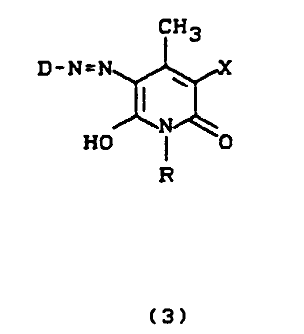 worin D = 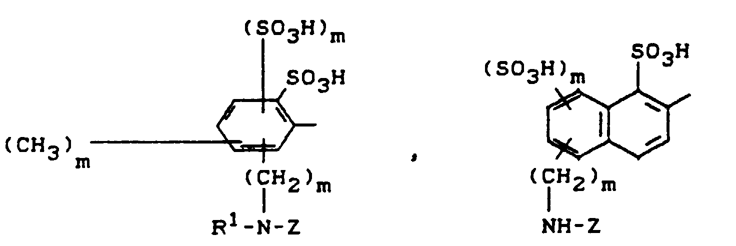 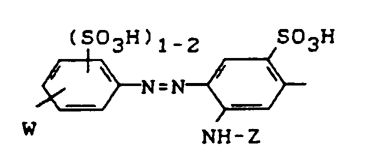
- m =: 0 oder 1
- R, R¹ =: gleich oder verschieden H, CH₃, C₂H₅, C₃H₇, C₄H₉, CH₂CH₂OH, CH₂CH₂SO₃H, CH₂CH₂OSO₃H oder CH₂CH₂CH₂-OCH₃
- X =: H, SO₃H, CONH₂ oder CH₂SO₃H,
- W =: H, CH₃, OCH₃, OC₂H₅, Cl, Br, NHCOCH₃ oder NHCONH₂.

In einer weiteren bevorzugten Ausführungsform entsprechen die Verbindungen der Formel (1) folgender Formel (4): 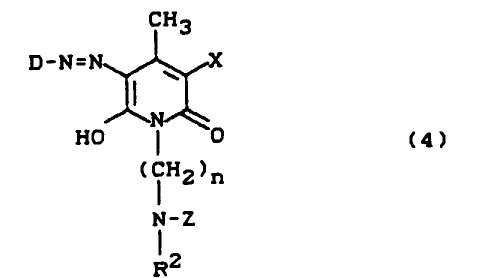 worin
D = 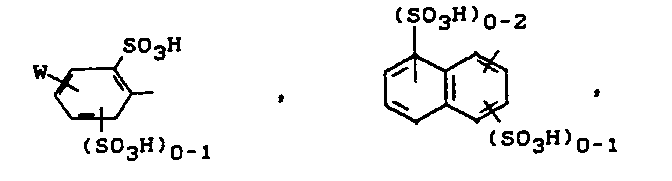 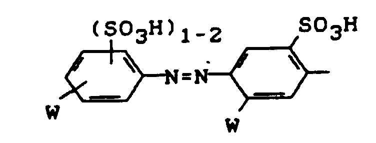
- n =: 2, 3 oder 4,
- R² =: H, CH₃, C₂H₅, C₃H₇, C₄H₉, CH₂CH₂OH, CH₂CH₂SO₃H, CH₂CH₂OSO₃H oder CH₂CH₂CH₂-OCH₃
- X =: H, SO₃H, CONH₂ oder CH₂SO₃H,
- W =: H, CH₃, OCH₃, OC₂H₅, Cl, Br, NHCOCH₃ oder NHCONH₂.

Besonders bevorzugt sind Monoazoreaktivfarbstoffe der Formel (5) 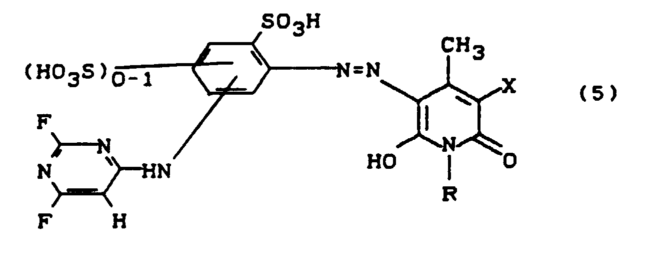 worin X und R die zu (3) und (4) genannte Bedeutung haben.

Die erfindungsgemäßen Azofarbstoffe können in mehreren tautomeren Formen existieren. Der Einfachheit halber werden die Farbstoffe nur in einer dieser tautomeren Formen angegeben.

Die Herstellung der Farbstoffe (1) erfolgt, indem man aminogruppenhaltige Pyridonfarbstoffe der Formel 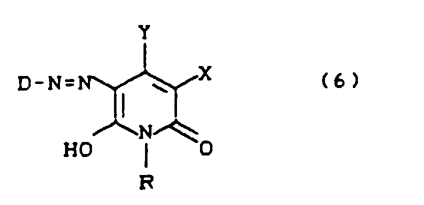 worin D, Y, X und R obengenannte Bedeutung haben und eine acylierbare Aminogrupppe aufweisen, mit 2,4,6-Trifluor-pyrimidin in Gegenwart von säurebindenden Mitteln im pH-Bereich von 3,5-9,5 kondensiert oder aber eine mit Z (= 2,6-difluor-4-pyrimidinyl-Rest) substituierte Aminoverbindung D-NH₂, diazotiert und in bekannter Weise auf ein Pyridonderivat kuppelt, das keinen Rest Z enthält,
oder eine Aminoverbindung D-NH₂, die keinen Rest Z enthält, diazotiert und in bekannter Weise auf ein mit Z substituiertes Pyridonderivat kuppelt.

Aminoverbindungen D-NH₂ zur Herstellung von Verbindung (3), z.B. solche der Formel
(7, Q=Z) bzw. (8, Q=Z) erhält man, indem Diaminoverbindungen der Formel (7, Q=H) bzw. (8, Q=H) mit 2,4,6-Trifluorpyrimidin in Gegenwart säurebindender Mittel kondensiert: 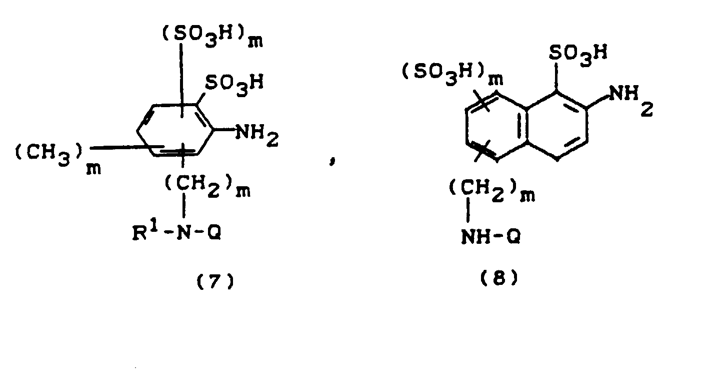 Azogruppenhaltige Aminoverbindungen D-NH₂, wie 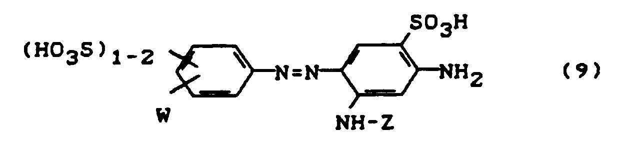 erhält man durch Diazotieren von Anilinderivaten der Formel (10) und Kuppeln der Diazonium 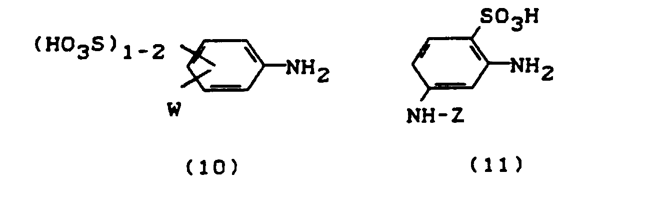 verbindungen auf eine Verbindung der Formel (11).

Aminoverbindungen der Formel D-NH₂ zur Herstellung von Verbindung 4 sind ebenso wie von Resten Z freie Pyridonderivate literaturbekannt z.B. DOS 2 123 061 (US-A 4 067 864). Die Herstellung von Z-substituierten Pyridonderivaten erfolgt durch Kondensation von 2,4,6-Trifluorpyrimidin mit Pyridonen, die eine primäre oder sekundäre Aminfunktion an einem der Substituenten aufweisen.

Die Herstellung von Monoazoreaktivfarbstoffen der Formel (5) erfolgt entweder durch Kondensation von Aminoazo-Farbstoffen der Formel 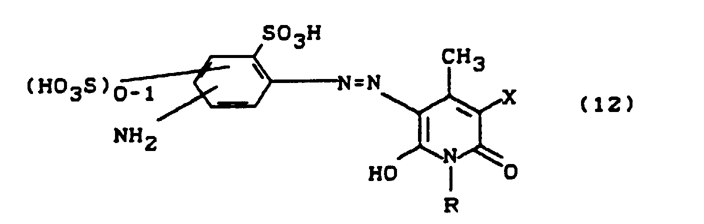 mit 2,4,6-Trifluorpyrimidin in Gegenwart von säurebindenden Mitteln, wie Soda oder Bicarbonat,
oder aber durch Diazotieren von Aminoverbindungen der Formel (13) 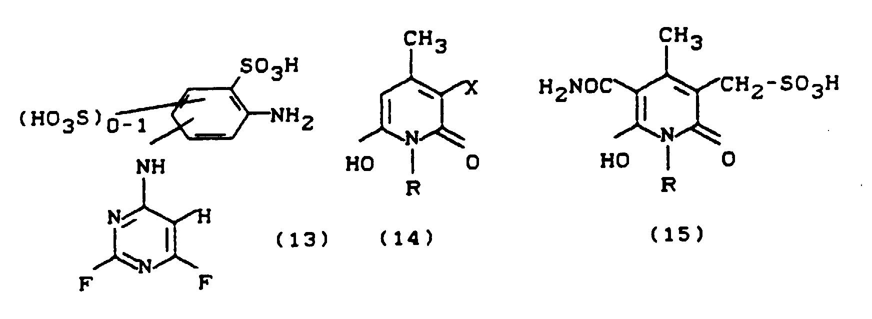 und Kuppeln der Diazoniumverbindungen auf Pyridone der Formel (14) bzw. (15), wie es z.B. in der DE-A-2 162 612 (US-A 3 994 906) beschrieben ist.

Verbindungen (13) sind z.B. durch Kondensation von 2,4-Diaminobenzoloulfonoäure bzw. Z,4-Diamino-1,5-benzoldisulfonsäure mit 2,4,6-Trifluorpyrimidin bei Temperaturen von 20° bis 50°C und pH-Werten von 4,5 bis 10,0 zugänglich.

Die neuen monofunkionellen Azopyridonfarbstoffe mit dem faserreaktiven 2,6-Difluor-4-pyrimidinyl-Rest eignen sich zum Färben und Bedrucken von Hydroxyl- oder Amidgruppen enthaltenden Materialien, wie Textilfasern, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßig in Gegenwart säurebindender Mittel und gegebenenfalls durch Hitzeeinwirkung nach den für Reaktivfarbstoffe üblichen Verfahren erfolgt.

Die angegebenen Formeln der Farbstoffe sind die der entsprechenden freien Säuren. Die Farbstoffe werden im allgemeinen in Form der Alkalisalze, z.B. der Lithium-, Natrium- oder Kaliumsalze, isoliert und als solche zum Färben und Bedrucken eingesetzt.

Die Farbstoffe lassen sich sowohl als Pulver wie auch als konzentrierte wässrige Farbstofflösung in der Färberei einsetzen.

Die in den folgenden Beispielen angegebenen Färbungen werden unter folgenden Bedingungen durchgeführt:

### Färbevorschrift 1:

2 Teile des gemäß Beispiel 1 erhältlichen Farbstoffes werden in 100 ml Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 60°C, wobei nach 30 Minuten 40 Teile kalzinierte Soda und nochmals 60 Teile Natriumchlorid zugegeben werden. Man hält die Temperatur 30 Minuten auf 60°C, spült und seift dann die Färbung während 15 Minuten in einer 0,3 %igen kochenden Lösung eines ionenfreien Waschmittels, spült und trocknet. Man erhält eine brillante grünstichig gelbe Färbung mit guten Echtheitseigenschaften.

### Färbevorschrift 2:

4 Teile des in Beispiel 1 hergestellten Reaktivfarbstoffes werden in 50 Teilen Wasser gelöst. Dazu gibt man 50 Teile einer Lösung, die pro Liter 5 g Natriumhydroxyd und 10 g kalziniertes Soda enthält. Mit der erhaltenen Lösung wird ein Baumwollgewebe foulardiert, so daß es um 70 % seines Gewichtes zunimmt, und dann auf eine Kaule aufgewickelt. Das Baumwollgewebe wird so während 3 bis 12 h bei Raumtemperatur gelagert. Danach wird die gefärbte Ware gespült, wahrend einer Viertelstunde mit einem nichtionogenen Waschmittel kochend geseift, nochmals gespült und getrocknet. Man erhält eine brillante grünstichig gelbe Färbung mit guten Echtheitseigenschaften.

### Beispiel 1

27,3 g 2,4-Diaminobenzolsulfonsäure werden in 150 ml Wasser suspendiert und mit verdünnter Natronlauge bei pH 6,5 gelöst. Man fügt 1 g Natriumdihydrogenphosphat und 1 g Dinatriumhydrogenphosphat als Puffersubstanzen zu und erwärmt auf 35°C. Innerhalb einer Stunde dosiert man 23,2 g 2,4,6-Trifluorpyrimidin zu und hält dabei sowie in der Nachreaktionsphase den pH-Wert mit Sodalösung konstant zwischen 6,2 und 6,5. Die Temperatur steigt während der Acylierung auf 40°C an und fällt nach einer einstündigen Nachrührzeit wieder auf 35°C ab.

Zur Acylierungsmischung gibt man 200 g Eis und 40 ml 25%ige Salzsäure und tropft dann innerhalb von 15 Minuten 35 ml einer Natriumnitritlösung (300 g/l) zu. Durch gelegentliche Eiszugabe hält man die Reaktionstemperatur unterhalb von 5°C. Die Diazotierung ist nach ca. 30 Minuten beendet. Die Diazoverbindung ist in hellgelber kristalliner Form ausgefallen. Der Überschuß an Nitrit wird mit Amidosulfonsäurelösung entfernt.

41,2 g 1,4-Dimethyl-3-aminocarbonyl-5-sulfomethyl-6-hydroxy-2-pyridon-Natriumsalz werden in 250 ml Wasser bei pH 7 gelöst und diese Lösung zur obigen Diazoniumsalzsuspension zudosiert. Durch Zutropfen von Sodalösung hält man den pH-Wert bei 6,5. Nach 30 Minuten ist die Kupplung beendet. Es resultiert eine klare gelbe Lösung. Der Farbstoff wird durch Zugabe von 90 g Kochsalz ausgesalzen und bei 40°C durch Abnutschen isoliert. Trocknen bei 50°C im Vakuum liefert 135 g salzhaltiges gelbes Farbstoffpulver, das Baumwolle nach dem für Reaktivfarbstoffe praktizierten Färbeverfahren in brillanten grünstichig gelbem Farbton färbt (λₘₐₓ = 420 nm in H₂O).

Der Farbstoff besitzt die Struktur

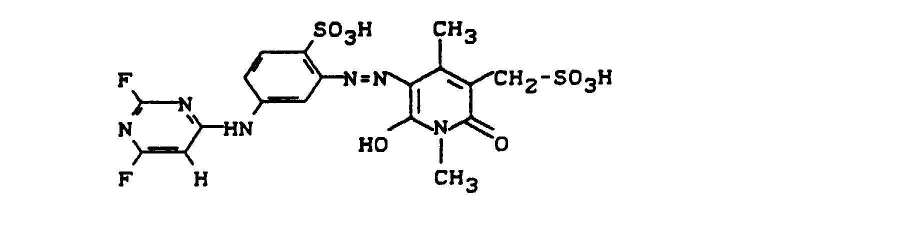

### Beispiel 2 bis 7

Ähnlich wertvolle Reaktivfarbstoffe mit vergleichbarer Nuance erhält man, wenn man anstelle von 1,1-Dimethyl-3-aminocarbonyl-5-sulfomethyl-6-hydroxy-2-pyridon in Beispiel 1 nun als Kupplungskomponente 1-Ethyl-4-methyl-3-aminocarbonyl-5-sulfomethyl-6-hydroxy-2-pyridon (Beispiel 2, λₘₐₓ = 420 nm), 1-n-Butyl-4-methyl-3-aminocarbonyl-5-sulfomethyl-6-hydroxy-2-pyridon (Beispiel 3, λₘₐₓ = 422 nm), 1,4-Dimethyl-3-sulfo-6-hydroxy-2-pyridon (Beispiel 4, λₘₐₓ = 421 nm), 1-(2-Sulfoethyl)-4-methyl-3-aminocarbonyl-6-hydroxy-2-pyridon (Beispiel 5), 1-(2'-Sulfatoethyl)-4-methyl-6-hydroxy-2-pyridon (Beispiel 6) oder 4-Carboxy-6-hydroxy-2-pyridon (= Citrazinsäure) (Beispiel 7) einsetzt.

### Beispiel 8

38,9 g 2,5-Diamino-1,4-benzoldisulfonsäure werden ganz analog zur 2,4-Diaminobenzolsulfonsäure in Beispiel 1 mit 23,2 g 2,4,6-Trifluorpyrimidin bei 40°C kondensiert, das Kondensationsprodukt diazotiert und analog Beispiel 1 auf 18,1 g 1,4-Dimethyl-6-hydroxy-2-pyridon gekuppelt. Es wird ein Farbstoff der Struktur 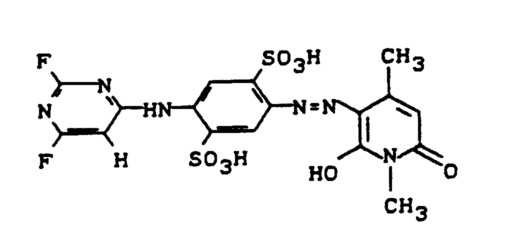 isoliert, der Baumwolle mit gelbem Farbton färbt.

### Beispiel 9

Beim Einsatz von 2,4-Diamino-1,5-benzoldisulfonsäure, 2,4,6-Trifluorpyrimidin und 1,4-Dimethyl-3-aminocarbonyl-6-hydroxy-2-pyridon in entsprechenden Mengenverhältnissen und Durchführung der drei Reaktionsschritte analog Beispiel 1 bzw. 8 erhält man einen Farbstoff der Struktur

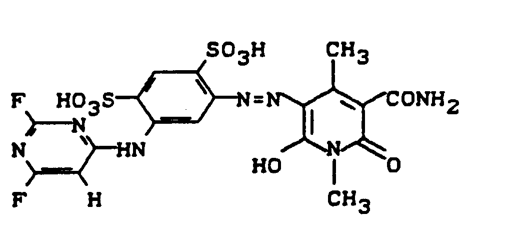

### Beispiel 10

36,5 g 5-Aminomethyl-2-amino-1-naphthalinsulfonsäure werden in 300 ml Wasser, 100 g Eis und 80 ml 25%iger Salzsäure angerührt und mit 35 ml einer 30%igen Natriumnitritlösung diazotiert. Die resultierende Lösung des Diazoniumsalzes wird nach Entfernen des Nitritüberschusses zu einer Lösung von 41,2 g 1,4-Dimethyl-3-aminocarbonyl-5-sulfomethyl-6-hydroxy-2-pyridon (Na-Salz) in 250 ml Wasser zudosiert. Dabei hält man den pH-Wert durch Zutropfen von Sodalösung konstant zwischen 6,5 bis 7,5. Die Kupplungsreaktion ist nach 30 Minuten beendet.

Anschließend erwärmt man auf 35°C und fügt portionsweise 23,2 g 2,4,6-Trifluorpyrimidin zu. Gleichzeitig dosiert man Sodalösung so zu, daß der pH-Wert sich im Bereich von 7,5 bis 8,5 befindet. Der Farbstoff kristallisiert langsam aus. Es werden nach einstündiger Nachrührzeit 40 g Natriumchlorid zugefügt, 30 Minuten gerührt und der Farbstoff isoliert. Das trockene Farbstoffpulver, dem die Struktur 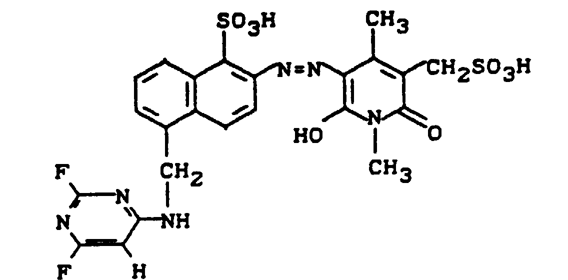 zukommt, liefert auf Baumwolle eine klare, grünstichig gelbe Färbung (λₘₐₓ = 432 nm).

### Beispiel 11

Verwendet man in Beispiel 10 anstelle von 5-Aminomethyl-2-amino-1-naphthalinsulfonsäure als Diazokomponente nun äquimolare Mengen an 2-Amino-4-(N-methylaminomethyl)-benzolsulfonsäure und setzt analog zu Beispiel 10 um, so erhält man einen Farbstoff der Struktur 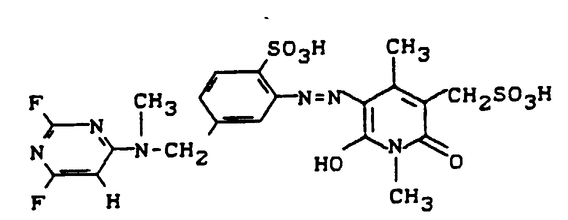 der auf Baumwolle brillante grünstichig gelbe Färbungen liefert.

### Beispiel 12

130 g des salzhaltigen Pyridonfarbstoffes der Struktur 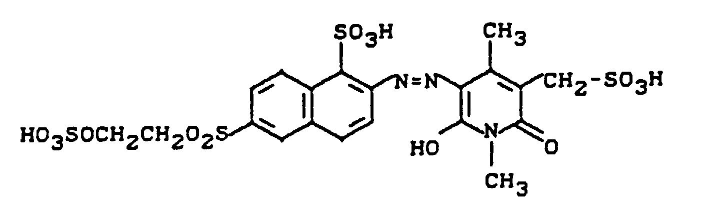 der in der europäischen Anmeldung EP 281 892 (Beispiel 1) beschrieben ist, werden in 400 ml Wasser gelöst und mit einer Lösung von 60 g Natrium-(2-aminoethyl)-sulfonat in 200 ml Wasser versetzt. Es wird auf 40°C erwärmt und für eine Stunde bei 40°C gerührt. Mit Salzsäure stellt man anschießend auf pH 6,0 und fügt 140 g Kochsalz hinzu. Der ausgefallene Farbstoff wird abgesaugt, und die isolierte feuchte Farbstoffpaste in 400 ml Wasser angerührt. Der pH-Wert wird auf 8,0 korrigiert und die Lösung auf 35°C erwärmt. Portionsweise fügt man nun 25,0 g 2,4,6-Trifluorpyrimidin zu und hält dabei sowie in der Nachreaktionsphase den pH-Wert mit Sodalösung konstant zwischen 7,5 und 8,5.

Nach ca. 1 Stunde ist die Kondensationsreaktion beendet. Es wird auf 20°C abgekühlt und mit 50 g Natriumchlorid und 50 g Kaliumchlorid ausgesalzen. Der Farbstoff wird abgesaugt und getrocknet. Er färbt Baumwolle in grünstichig gelbem Farbton und besitzt die Struktur

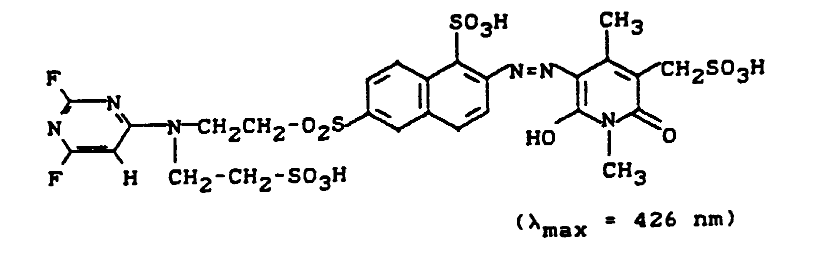

### Beispiel 13

Eine Diazoniumsalzmischung, die durch Diazotieren von 25,1 g 3-Aminobenzolsulfonsäure bereitet wurde, wird zu einer neutralen Mischung von 50,0 g des Kondensationsproduktes aus 2,4-Diaminobenzolsulfonsäure (Na-Salz) und 2,4,6-Trifluorpyrimidin (siehe Beispiel 1) in 250 ml Wasser zudosiert. Der pH-Wert wird dabei durch stetige Zugabe von festem Natriumhydrogencarbonat bei 6,0 bis 6,5 gehalten. Nach sechsstündiger Reaktionszeit wird der Farbstoff der Struktur 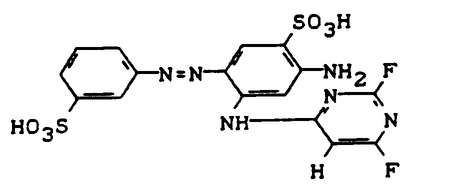 durch Aussalzen mit Kochsalz und Absaugen isoliert. Die feuchte Paste des Zwischenproduktes wird in 200 ml Wasser und 200 g Eis suspendiert und bei 0°C mit Salzsäure auf pH 2,3 bis 2,5 gestellt. Es wird langsam mit 35 ml einer Natriumnitritlösung (300 g/l) diazotiert, wobei sowohl die Temperatur bei 0°C wie auch der pH-Wert bei 2,3 bis 2,5 konstant gehalten wird. Es wird eine Stunde nachgerührt, der Nitritüberschuß entfernt und die Diazotierung innerhalb von 30 Minuten zu einer Lösung von 41,2 g 1,4-Dimethyl-3-aminocarbonyl-5-sulfomethyl-6-hydroxy-2-pyridon (Na-Salz) in 250 ml Wasser gegeben.

Durch Zutropfen von Sodalösung hält man den pH-Wert bei 6,5 bis 7,5. Nach Zugabe der Diazotierung rührt man 15 Minuten nach und isoliert den Farbstoff durch Aussalzen (100 g Kaliumchlorid) und Abnutschen. Nach dem Trocknen bei 60°C resultieren 145 g eines salzhaltigen roten Farbstoffpulvers, dem folgende Struktur zukommt: 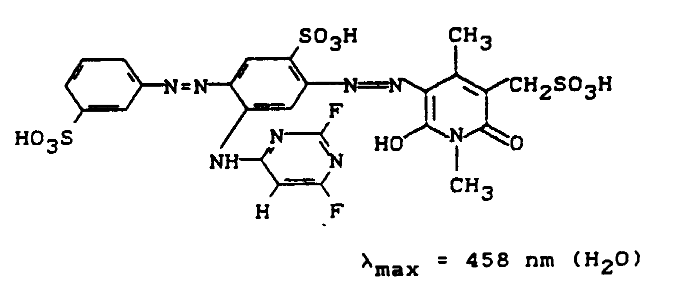 Der neue Disazopyridonfarbstoff färbt Baumwolle in brillanten orangenen Farbtönen.

Variiert man in Beispiel 13 die erste Diazokomponente sowie das Pyridonderivat und verfährt bei den Umsetzungen wie in Beispiel 13, so erhält man folgende, ebenfalls wertvolle Reaktivfarbstoffe.

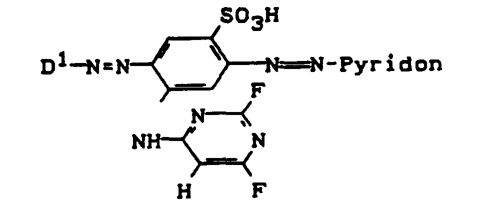

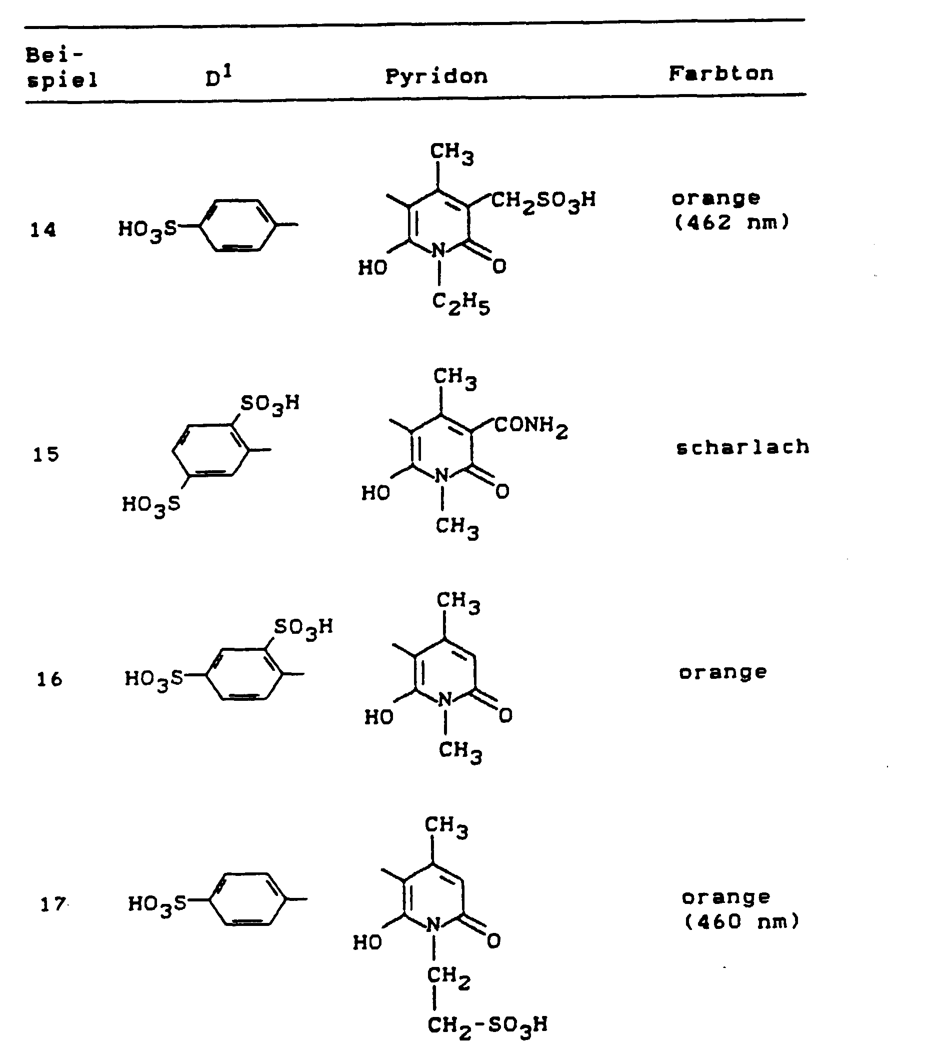

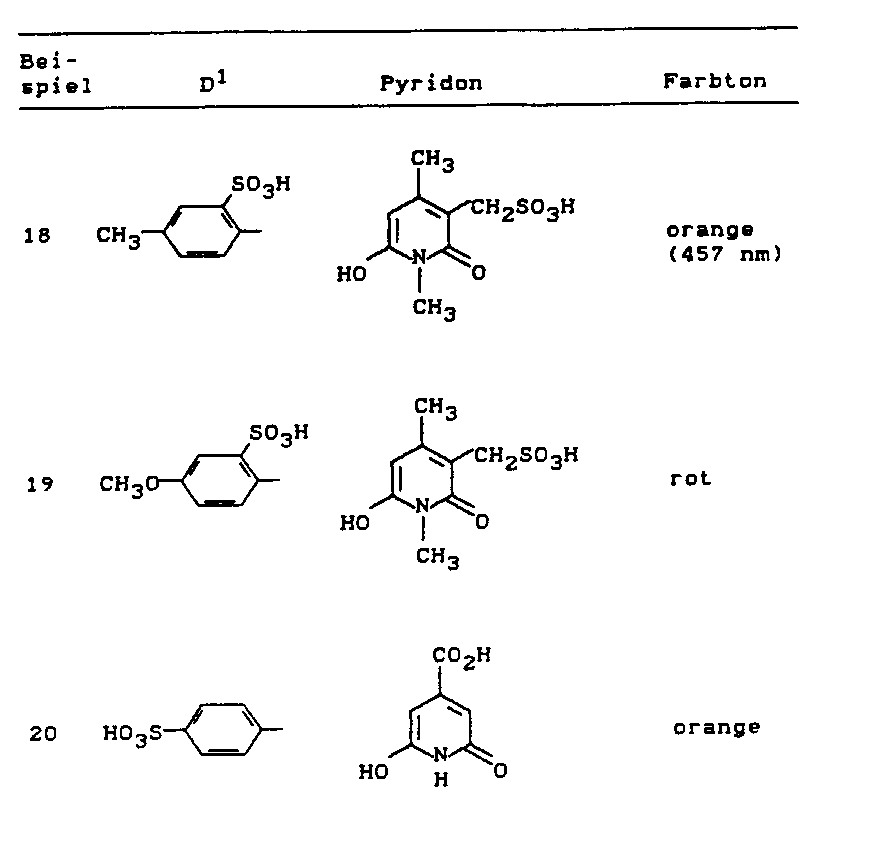

### Beispiel 21

28,6 g 1-(2-Aminoethyl)-3-aminocarbonyl-4-methyl-6-hydroxy-2-pyridon werden in 250 ml Wasser neutral gelöst und die Lösung auf 35°C erwärmt. Bei konstantem pH 8,0 fügt man portionsweise 23,2 g 2,4,6-Trifluorpyrimidin zu. Der pH-Wert wird durch Zugabe von Sodalösung kontrolliert. Es wird 30 Minuten bei 35°C nachgerührt, wobei das Kondensationsprodukt der Struktur 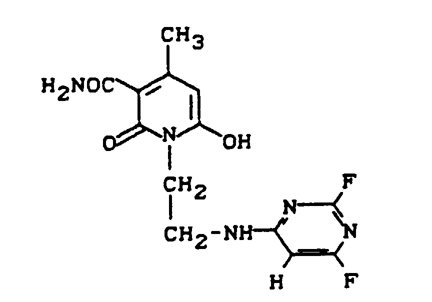 teilweise auskristallisiert. Man erwärmt auf 60°C und fügt dann bei pH 7 55 ml einer neutralen 37%igen Hydroxymethansulfonsäurelösung zu, Es wird bei konstantem pH 7 für eine weitere Stunde bei 60°C erwärmt, wobei eine klare Reaktionslösung resultiert. Die Lösung des neuen Zwischenproduktes der Struktur 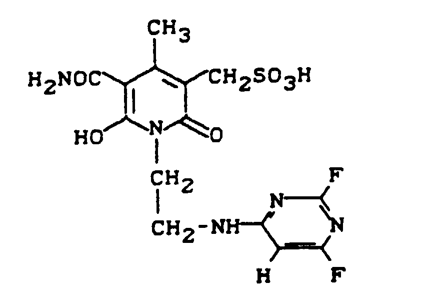 wird auf Raumtemperatur abgekühlt und mit einer Diazoniumsalzmischung, die durch Diazotieren von 47,1 g 2-Amino-1,5-naphthalindisulfonsäure-Na-Salz bereitet wurde, umgesetzt. Während der Kupplung hält man den pH-Wert mit Sodalösung konstant bei 6,5 bis 7,5. Nach Reaktionsende salzt man mit Natriumchlorid aus und saugt den ausgefallenen Farbstoff ab. Nach dem Trocknen erhält man ca. 150 g eines gelben Farbstoffpulvers der Struktur 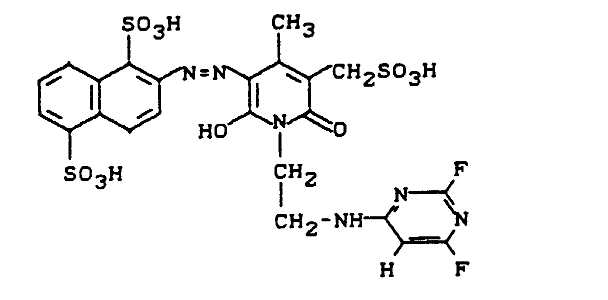 das Baumwolle in klaren gelben Tönen mit hohem Echtheitsniveau färbt.
λₘₐₓ = 430 nm (H₂O)

Durch Variation der Diazokomponente sowie der Pyridonsubstitution sind in Analogie zu Beispiel 21 weitere wertvolle Reaktivfarbstoffe zugänglich:

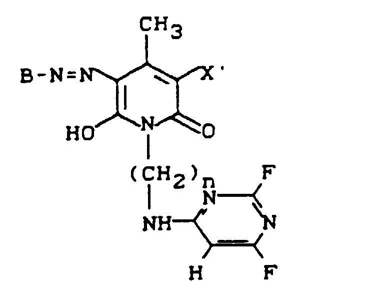

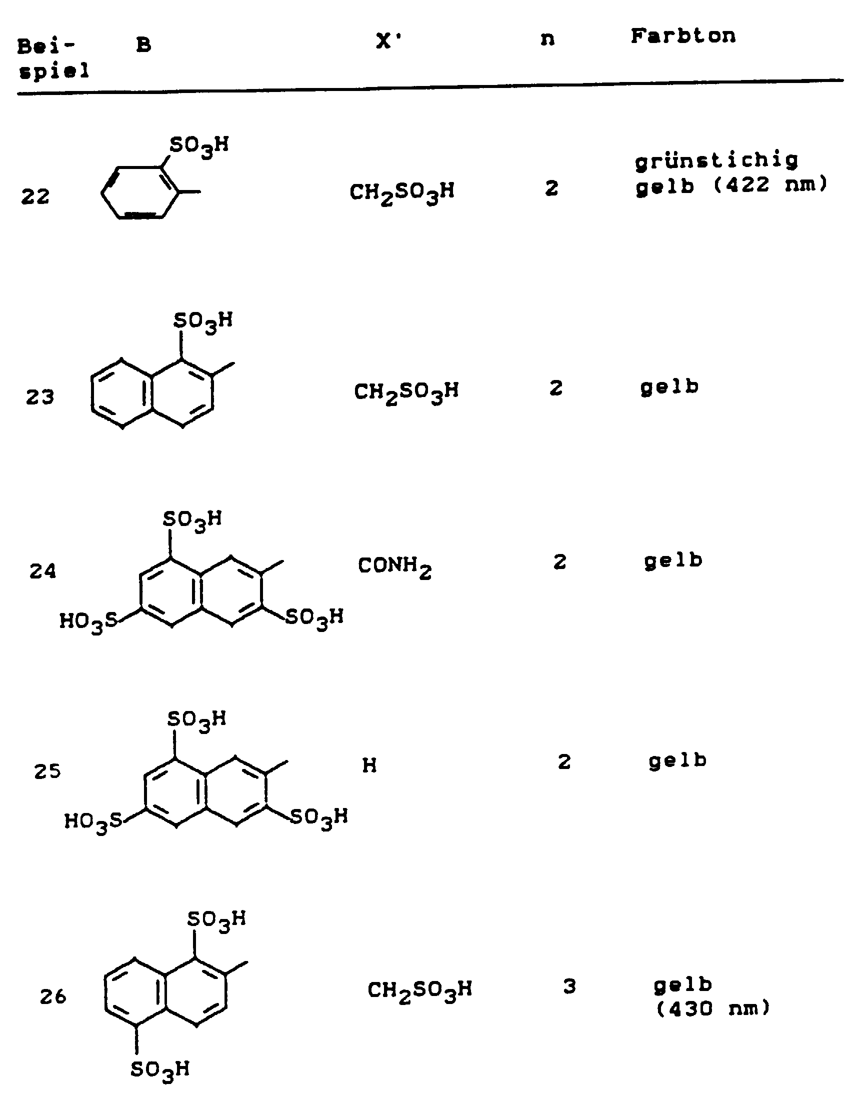

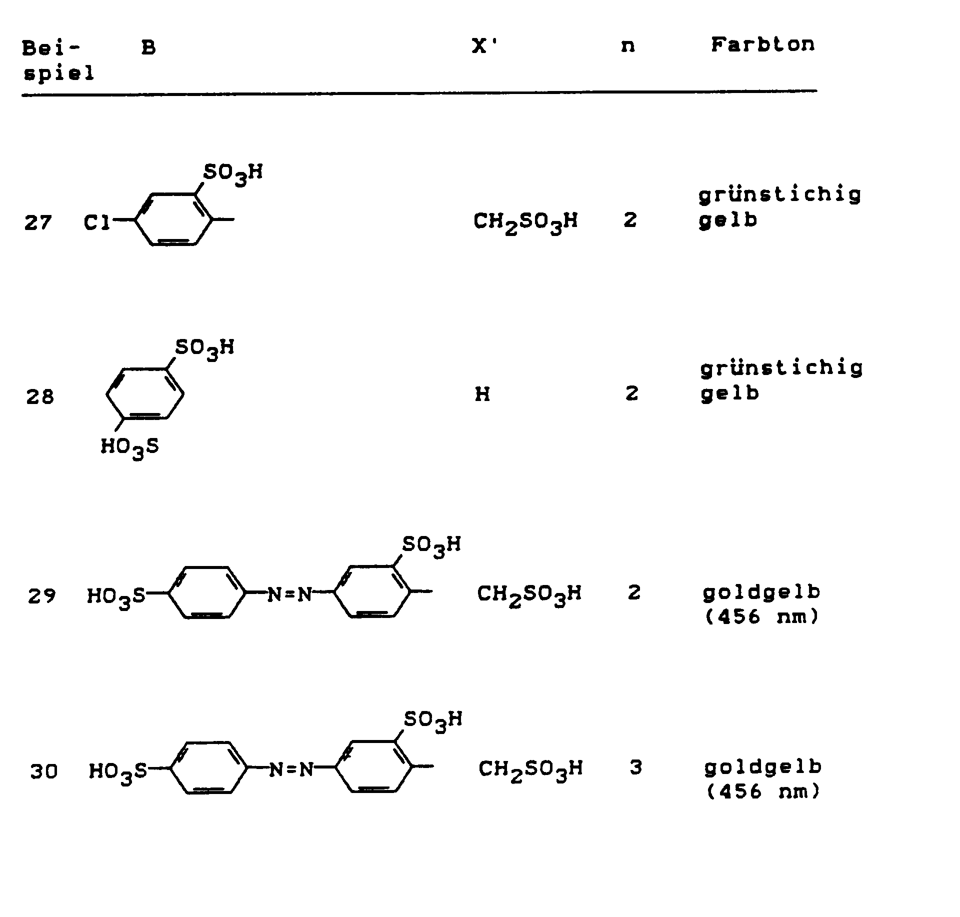

## Patentansprüche

1. Monoreaktive Mono- und Disazoreaktivfarbstoffe der Formel 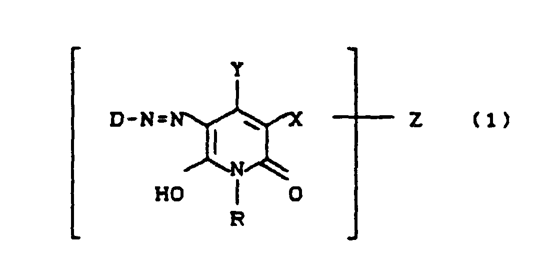 worin
D = Rest einer Diazokomponente,
R = H, ein gegebenenfalls durch OH, SO₃H, OSO₃H, NH₂, CO₂H, NH(C₁-C₄-Alkyl) oder C₁-C₄-Alkoxy substituierter C₁-C₆-Alkylrest, ein cycloaliphatischer C₃-C₆-Kohlenwasserstoffrest, ein gegebenenfalls durch SO₃H, CO₂H, CH₃, Cl, Br, OCH₃, OC₂H₅, NH₂, NH(C₁-C₄-Alkyl) substituierter Phenyl-oder Hetarylrest,
X = H, Cl, Br, CH₃, CH₂SO₃H, CH(CH₃)-SO₃H, CONH₂, CN, SO₂CH₃, COCH₃, 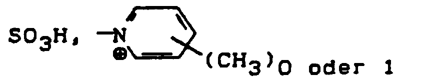 oder 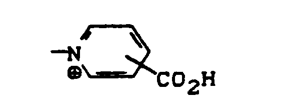
Y = H, OH, ein gegebenenfalls durch Cl, OH, SO₃H, OSO₃H, CO₂H substituierter C₁-C₄-Alkyrest; ein gegebenenfalls durch SO₃H, CO₂H, CH₃, Cl, Br, OCH₃, OC₂H₅, NH₂, NH(C₁-C₄-Alkyl) substituierter Phenyl-bzw. Benzylrest oder CO₂H und
Z für den faserreaktiven Rest der Formel (2) 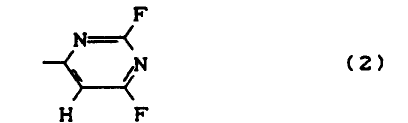
steht.

2. Farbstoffe des Anspruchs 1 der Formel 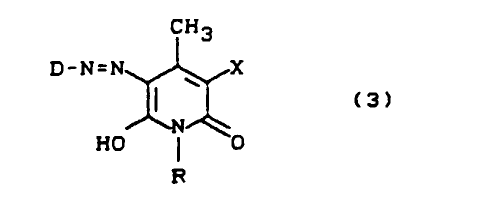 worin D = 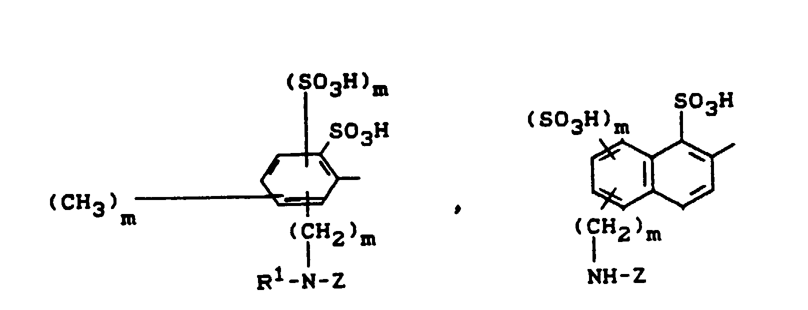 oder 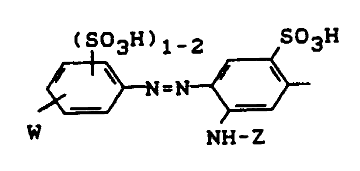 worin
m = 0 oder 1
R, R¹ = gleich oder verschieden H, CH₃, C₂H₅, C₃H₇, C₄H₉, CH₂CH₂OH, CH₂CH₂SO₃H, CH₂CH₂OSO₃H oder CH₂CH₂CH₂-OCH₃
X = H, SO₃H, CONH₂ oder CH₂SO₃H,
W = H, CH₃, OCH₃, OC₂H₅, Cl, Br, NHCOCH₃ oder NHCONH₂.

3. Farbstoffe des Anspruchs 1 der Formel 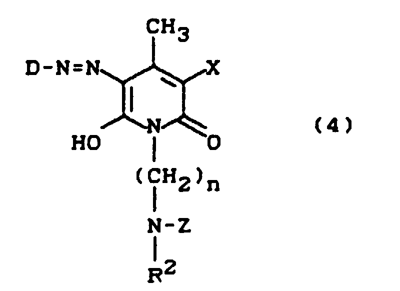 worin D = 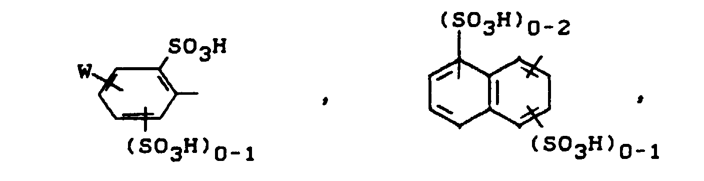 oder 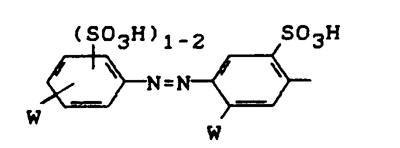
n = 2, 3 oder 4,
R² = H, CH₃, C₂H₅, C₃H₇, C₄H₉, CH₂CH₂OH, CH₂CH₂SO₃H, CH₂CH₂OSO₃H oder CH₂CH₂CH₂-OCH₃
X = H, SO₃H, CONH₂ oder CH₂SO₃H,
W = H, CH₃, OCH₃, OC₂H₅, Cl, Br, NHCOCH₃ oder NHCONH₂.

4. Farbstoffe des Anspruchs 1 der Formel 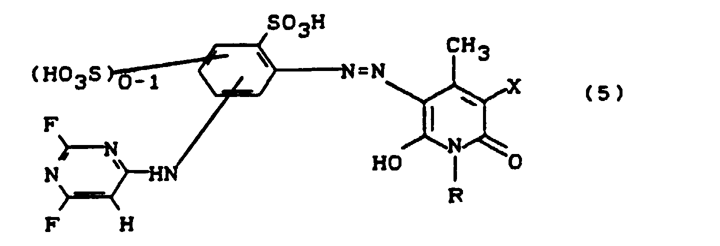 worin X und R die genannte Bedeutung haben.

5. Verfahren zum Herstellen von Reaktivfarbstoffen gemäß Anspruch 1, dadurch gekennzeichnet, daß man aminogruppenhaltige Pyridonfarbstoffe der Formel 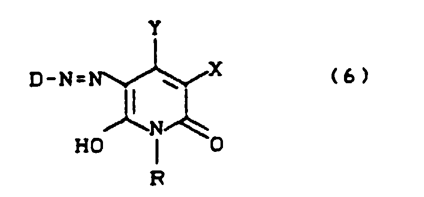 worin D, Y, X und R die in Anspruch 1 genannte Bedeutung haben und eine acylierbare Aminogrupppe aufweisen, mit 2, 4,6-Trifluorpyrimidin in Gegenwart von säurebindenden Mitteln im pH-Bereich von 3,5-9,5 kondensiert oder aber eine mit Z (= 2,6-difluor-4-pyrimidinyl-Rest) substituierte Aminoverbindung D-NH₂, diazotiert und in bekannter Weise auf ein Pyridonderivat kuppelt, das keinen Rest Z enthält,
oder eine Aminoverbindung D-NH₂, die keinen Rest Z enthält, diazotiert und in bekannter Weise auf ein mit Z substituiertes Pyridonderivat kuppelt.

6. Verfahren zum Färben oder Bedrucken von Materialien mit einem Reaktivfarbstoff, dadurch gekennzeichnet, daß man einen Farbstoff gemäß Anspruch 1 verwendet.

## Claims

1. Monoreactive mono- and disazo reactive dyestuffs of the formula 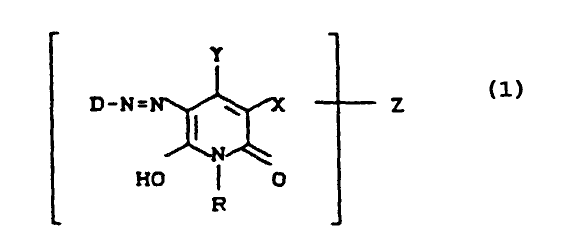 in which
D denotes the radical of a diazo component,
R denotes H, a C₁-C₆-alkyl radical which is unsubstituted or substituted by OH, SO₃H, OSO₃H, NH₂, CO₂H, NH(C₁-C₄-alkyl) or C₁-C₄-alkoxy, a cycloaliphatic C₃-C₆-hydrocarbon radical, a phenyl or hetaryl radical each of which is unsubstituted or substituted by SO₃H, CO₂H, CH₃, Cl, Br, OCH₃, OC₂H₅, NH₂, NH(C₁-C₄-alkyl),
X denotes H, Cl, Br, CH₃, CH₂SO₃H, CH(CH₃)-SO₃H, CONH₂,
CN, SO₂CH₃, COCH₃, SO₃H, 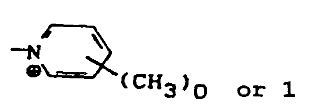 or 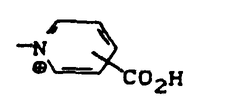
Y denotes H, OH, a C₁-C₄-alkyl radical which is unsubstituted or substituted by Cl, OH, SO₃H, OSO₃H, CO₂H; a phenyl or benzyl radical each of which is unsubstituted or substituted by SO₃H, CO₂H, CH₃, Cl, Br, OCH₃, OC₂H₅, NH₂, NH(C₁-C₄-alkyl) or denotes CO₂H and
Z denotes a fibre-reactive radical of the formula (2)

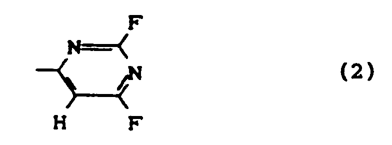

2. Dyestuffs of Claim 1 of the formula 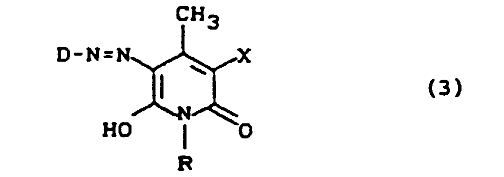 in which D denotes 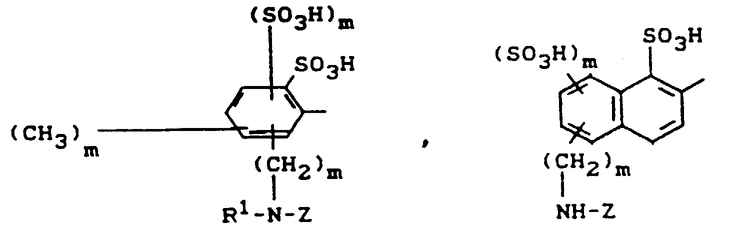 or 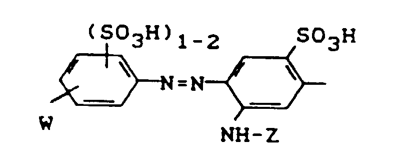 in which
m denotes 0 or 1
R, R¹ identical or different denote H, CH₃, C₂H₅, C₃H₇, C₄H₉, CH₂CH₂OH, CH₂CH₂SO₃H, CH₂CH₂OSO₃H or CH₂CH₂CH₂-OCH₃
X denotes H, SO₃H, CONH₂ or CH₂SO₃H,
W denotes H, CH₃, OCH₃, OC₂H₅, Cl, Br, NHCOCH₃ or NHCONH₂.

3. Dyestuffs of Claim 1 of the formula 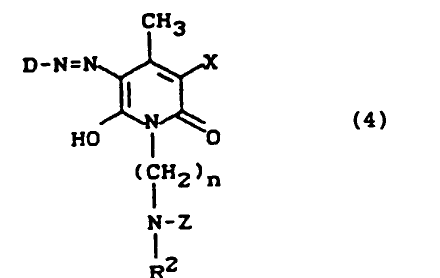 in which
D denotes 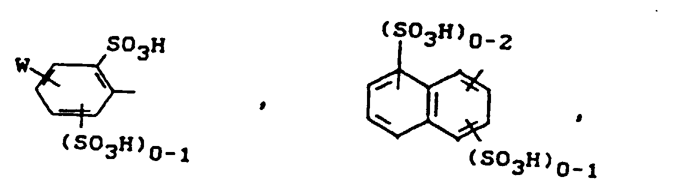 or 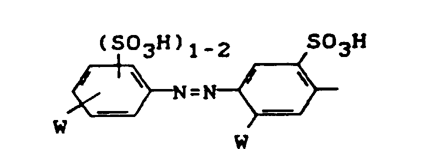
n denotes 2, 3 or 4,
R² denotes H, CH₃, C₂H₅, C₃H₇, C₄H₉, CH₂CH₂OH, CH₂CH₂SO₃H, CH₂CH₂OSO₃H or CH₂CH₂CH₂-OCH₃
X denotes H, S0₃H, CONH₂ or CH₂SO₃H,
W denotes H, CH₃, OCH₃, OC₂H₅, Cl, Br, NHCOCH₃ or NHCONH₂.

4. Dyestuffs of Claim 1 of the formula 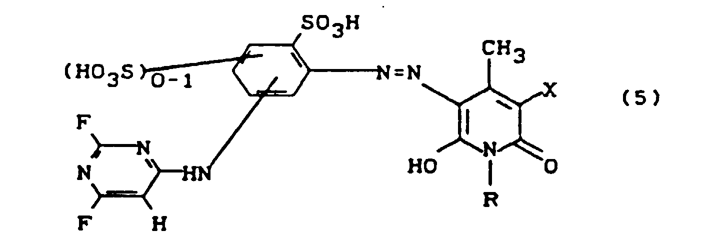 in which X and R have the meaning mentioned.

5. Process for the preparation of reactive dyestuffs according to Claim 1, characterised in that amino-containing pyridone dyestuffs of the formula 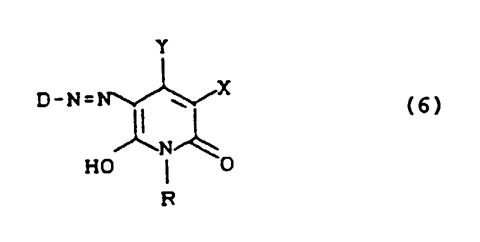 in which D, Y, X and R have the meaning mentioned in Claim 1 and contain an acylatable amino group, are condensed with 2,4,6-trifluoropyrimidine in the presence of acid-binding agents in the pH range from 3.5-9.5 or else an amino compound D-NH₂ substituted by Z (= 2,6-difluoro-4-pyrimidinyl radical) is diazotised and the product is coupled in a known manner onto a pyridone derivative not containing any radical Z, or an amino compound D-NH₂ not containing any radical Z is diazotised and the product is coupled in a known manner onto a pyridone derivative substituted by Z.

6. Process for the dyeing or printing of materials with a reactive dyestuff, characterised in that a dyestuff according to Claim 1 is used.

## Revendications

1. Colorants mono- et disazoïques monoréactifs de formule : 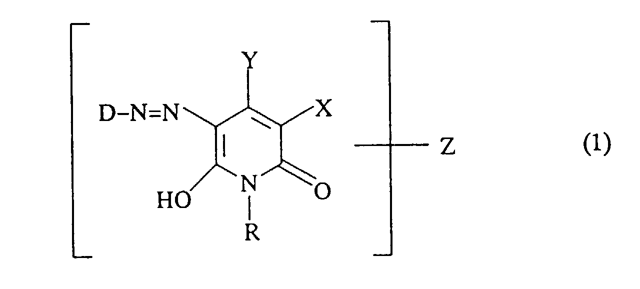 dans laquelle
D représente le radical d'un composant diazotable,
R représente H, un groupe alkyle en C₁-C₆ éventuellement substitué par OH, SO₃H, OSO₃H, NH₂, CO₂H, NH(alkyle en C₁-C₄) ou alcoxy en C₁-C₄, un radical hydrocarboné cycloaliphatique en C₃-C₆, un radical phényle ou hétéroaryle éventuellement substitué par SO₃H, CO₂H, CH₃, Cl, Br, OCH₃, OC₂H₅, NH₂, NH(alkyle en C₁-C₄),
X = H, Cl, Br, CH₃, CH₂SO₃H, CH(CH₃)-SO₃H, CONH₂, CN, 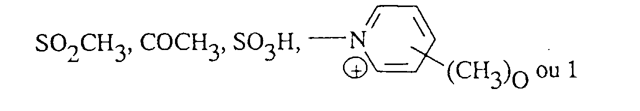 ou 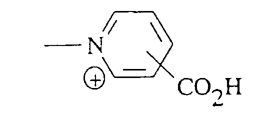
Y représente H, OH, un groupe alkyle en C₁-C₄ éventuellement substitué par Cl, OH, SO₃H, OSO₃H, CO₂H ; un radical phényle ou benzyle éventuellement substitué par SO₃H, CO₂H_{,} CH₃, Cl, Br, OCH₃, OC₂H₅, NH₂, NH(alkyle en C₁-C₄), ou un groupe CO₂H et
Z représente le radical réactif avec les fibres, de formule (2) :

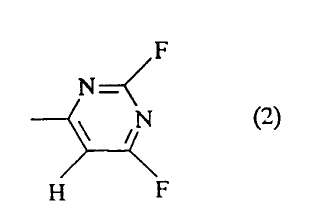

2. Colorants de la revendication 1, de formule : 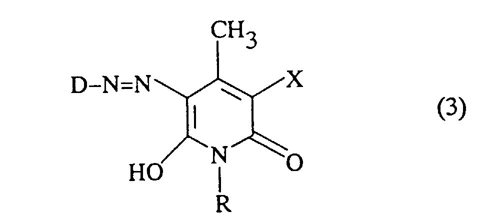 dans laquelle D = 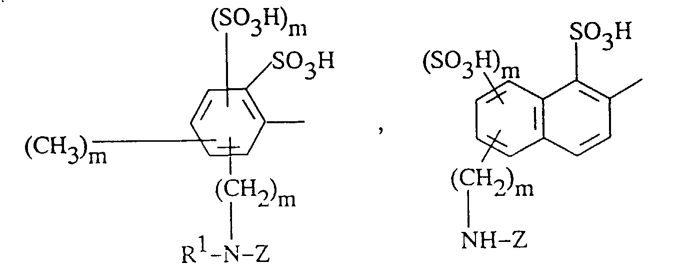 ou 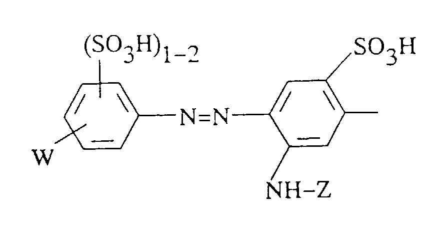
m = 0 ou 1,
R, R¹, ayant des significations identiques ou différentes, représentent chacun H, CH₃, C₂H₅, C₃H₇, C₄H₉, CH₂CH₂OH, CH₂CH₂SO₃H, CH₂CH₂OSO₃H ou CH₂CH₂CH₂-OCH_{3,}
X représente H, SO₃H, CONH₂ ou CH₂SO₃H,
W représente H, CH₃, OCH₃, OC₂H₅, Cl, Br, NHCOCH₃ ou NHCONH₂.

3. Colorants de la revendication 1, de formule : 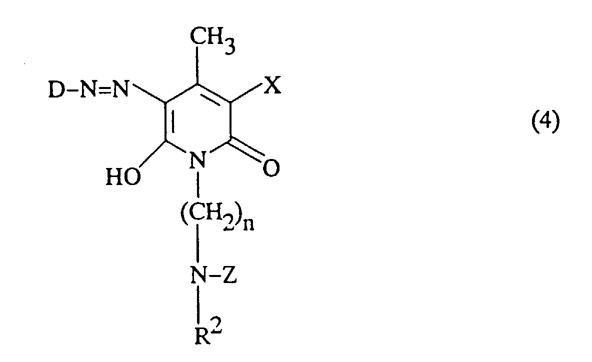 dans laquelle
D = 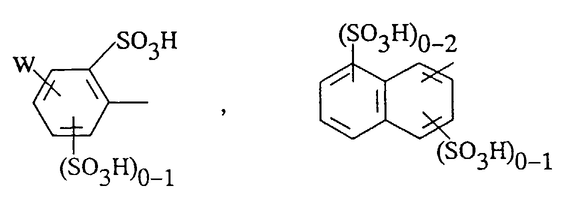 ou 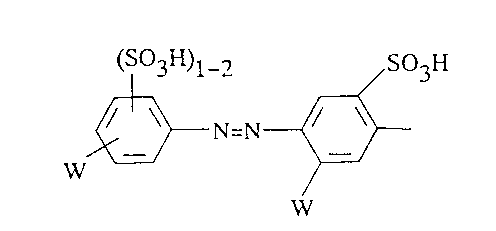
n = 2, 3 ou 4,
R² = H, CH₃, C₂H₅, C₃H₇, C₄H₉, CH₂CH₂OH, CH₂CH₂SO₃H, CH₂CH₂OSO₃H ou CH₂CH₂CH₂-OCH₃,
X = H, SO₃H, CONH₂ ou CH₂SO₃H,
W = H, CH₃, OCH₃, OC₂H₅, Cl, Br, NHCOCH₃ ou NHCONH₂.

4. Colorants de la revendication 1, de formule : 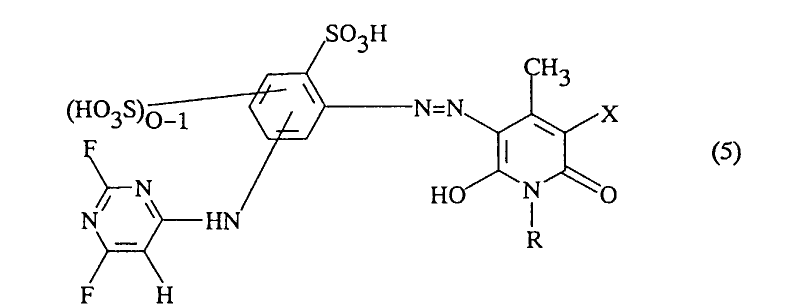 dans laquelle X et R ont les significations indiquées ci-dessus.

5. Procédé de préparation des colorants réactifs de la revendication 1, caractérisé en ce que l'on condense des colorants de pyridone, contenant des groupes amino, de formule : 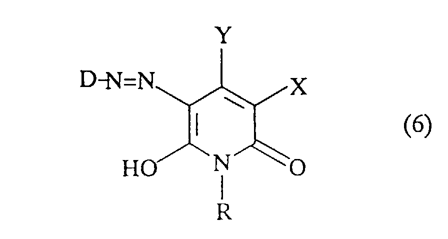 dans laquelle D, Y, X et R ont les significations indiquées dans la revendication 1, et qui portent un groupe amino acylable, avec la 2,4,6-trifluoropyrimidine en présence de capteurs d'acide, dans un intervalle de pH de 3,5 à 9,5, ou bien on diazote un dérivé aminé D-NH₂ portant un substituant Z (= radical 2,6-difluoro-4-pyrimidinyle) et on le copule de manière connue en soi avec un dérivé de pyridone qui ne contient pas de groupe Z, ou bien on diazote un dérivé aminé D-NH₂ qui ne contient pas de groupe Z et on le copule de manière connue en soi avec un dérivé de pyridone portant un substituant Z.

6. Procédé pour la teinture ou l'impression de matières à l'aide d'un colorant réactif, caractérisé en ce que l'on utilise un colorant selon la revendication 1.
